# EUROPÄISCHE PATENTSCHRIFT

(11) **EP 4 281 270 B1**
(45) Veröffentlichungstag und Bekanntmachung des Hinweises auf die Patenterteilung: **02.07.2025**
(21) Anmeldenummer: 22700990.9
(22) Anmeldetag: 21.01.2022
(51) Int. Cl.: B29C 51/32, D21J 5/00, B26D 1/04, B26D 5/08, B26F 1/44, B29C 51/44, B29C 51/08, B29C 51/00, B29K 311/10

(54) **FORMWERKZEUG, FORMMASCHINE UND VERFAHREN ZUM FORMEN VON DREIDIMENSIONALEN ARTIKELN**
DIE, MOULDING MACHINE AND METHOD FOR MOULDING THREE-DIMENSIONAL ARTICLES
MATRICE, MACHINE DE MOULAGE ET PROCÉDÉ DE MOULAGE D'ARTICLES TRIDIMENSIONNELS

(30) Priorität: 22.01.2021 DE 102021101358
(43) Veröffentlichungstag der Anmeldung: 29.11.2023
(73) Patentinhaber: Marbach Werkzeugbau GmbH, 74080 Heilbronn (DE)
(72) Erfinder: WEIBLER, Klaus, 74626 Bretzfeld-Bitzfeld (DE); RÜGER, Philipp, 74078 Heilbronn (DE)
(74) Vertreter: Lambacher, Michael
(86) Internationale Anmeldenummer: PCT/EP2022/051333
(87) Internationale Veröffentlichungsnummer: WO 2022/157302

(56) Entgegenhaltungen:
- EP-B1- 2 408 607
- EP-B1- 2 945 878
- US-A- 5 759 594
- US-A1- 2009 096 127
- US-A1- 2019 070 819

## Beschreibung

### Technisches Gebiet

Die vorliegende Erfindung betrifft das Umformen von flächenförmigen Materialbögen zu dreidimensionalen Artikeln. Insbesondere betrifft die Erfindung ein Formwerkzeug sowie die Verwendung eines derartigen Formwerkzeugs zur Umformung eines Materialbogens in wenigstens einen dreidimensionalen Artikel. Ferner umfasst die Erfindung ein Verfahren zum Herstellen wenigstens eines dreidimensionalen Artikels aus einem flächenförmigen Materialbogen.

### Stand der Technik

Behälter, Becher oder Kapseln aus Plastikmaterial, wie beispielsweise Polyethylenterephthalat (PET), Polystyrol (PS) oder Polypropylen (PP) werden zur Portionierung und Verpackung von Lebensmitteln im großen Stil eingesetzt. Zur Herstellung derartiger Artikel kann beispielsweise ein Spritzgussverfahren oder ein Umformverfahren, wie beispielsweise das Thermoformen, zum Einsatz kommen.

Beim Thermoformen wird eine thermoplastische Kunststofffolie zwischen einem Werkzeugunterteil und einem Werkzeugoberteil des verwendeten Thermoformwerkzeugs angeordnet. Im Anschluss wird das geöffnete Thermoformwerkzeug geschlossen, indem die beiden Werkzeugteile aufeinander zubewegt werden. Die zwischen den beiden Werkzeugteilen angeordnete Folie wird mit Hilfe von Druckluft und/oder wenigstens einem Vorstrecker in wenigstens eine Formkavität einer im Werkzeugunterteil oder Werkzeugoberteil aufgenommenen Form vorgestreckt. Mit Hilfe von Druckluft und/oder Unterdruck kann die vorgestreckte Folie in der wenigstens einen Kavität vollständig ausgeformt werden, wobei die Seitenwand der Formkavität und der die Kavität abschließende Formboden die Form des zu formenden Artikels definieren. Im Anschluss wird das Thermoformwerkzeug geöffnet, d.h. die beiden Werkzugteile werden wieder voneinander wegbewegt, und der geformte Artikel kann aus dem Thermoformwerkzeug entnommen werden.

Bei Mehrfachwerkzeugen weist die Form eine Vielzahl von Formkavitäten auf. Somit können mit einem Formzyklus eine Vielzahl von Artikeln gleichzeitig geformt werden. Derartige Formwerkzeuge und Formverfahren zum Umformen von thermoplastischen Kunststofffolien bzw. Kunststoffbögen zu dreidimensionalen Artikeln, insbesondere zu Behältern, Bechern oder Kapseln, sind beispielsweise aus den Druckschriften EP 1 163 996 B1, DE 20 2018 106 461 U1 und US 6 440 354 B1 bekannt. Ferner ist aus der US 5 759 594 A ein Formwerkzeug bekannt, das zur Umformung von faserverstärkten Kunststofffolien ausgelegt ist. Das Formwerkzeug umfasst ein Werkzeugunterteil und ein Werkzeugoberteil sowie eine in Umfangsrichtung am Werkzeugunterteil angeordnete Schneideinrichtung mit einem Schneidmesser. Das Schneidmesser kann mit Hilfe eines Aktors bewegt werden, um den Materialbogen zu schneiden bzw. anzuschneiden.

Aus der US 2007/0 257 397 A1 ist ebenso ein Thermoformwerkzeug mit einem beweglichen Schneidgerät bekannt, das zum Abschneiden von überschüssigem Material während der Umformung eines Materialbogens zu dreidimensionalen Artikeln vorgesehen ist. Formwerkzeuge mit Schneidelementen zum Schneiden bzw. Anschneiden eines umzuformenden Materialbogens sind ferner aus der EP 2 408 607 B1, US 2009/0096127 A1 und EP 2 945 878 B1 bekannt. Das Schneiden eines Materialbogens erfolgt bei den hier erwähnten Druckschriften bei geschlossenem Formwerkzeug.

Der Vorteil von Thermoformverfahren ist, dass Artikel in großen Mengen in guter Qualität und günstig hergestellt werden können. Nachteilig ist jedoch, dass nicht fachgerecht entsorgte Kunststoffartikel die Umwelt belasten, da sie nicht biologisch abbaubar sind. Aufgrund der stetigen Zunahme von Plastikmüll ist das Bedürfnis gewachsen, Behälter zur Portionierung von Lebensmitteln aus biologisch abbaubarem Material herzustellen. In den letzten Jahren hat es ermutigende Ansätze gegeben, Behälter aus Naturfasern, insbesondere aus Zellulose, herzustellen. Beispielsweise wird in der WO 2017/160218 A1 eine Technik beschrieben, bei der Zellulosefasern zu flächenförmigen Bögen verarbeitetet und anschließend mit Hilfe einer Formpresse zu dreidimensionalen Artikeln umgeformt werden. Umformdrücke im Bereich von 1 MPa bis 100 MPa sowie Temperaturen im Bereich von 100 °C bis 300 °C sind erforderlich, um Zellulosebögen zu dreidimensionalen Artikeln gewünschter Wandstärke umzuformen.

EP 2 408 607 B1, US 2019/070819 A1, US 5 759 594 A, US 2009/096127 A1 und EP 2 945 878 B1 offenbaren Formwerkzeuge nach dem Oberbegriff des Anspruchs 1.

Da Bögen aus Naturfasern jedoch bei Weitem nicht die Elastizitätseigenschaften von thermoplastischen Materialien aufweisen, bleibt die Herstellung von Behältern in großer Anzahl und in gleichbleibender Qualität eine Herausforderung. Selbst durch chemische Behandlung von Naturfaserbögen mittels Additiven können die elastischen Eigenschaften von thermoplastischen Kunststofffolien nicht erreicht werden. Die Folge ist, dass es beim Umformprozess immer wieder zu unkontrollierter Rissbildung in den Naturfaserbögen kommen kann.

Es ist daher Aufgabe der vorliegenden Erfindung, eine Umformtechnik bereitzustellen, welche den Stand der Technik weiter verbessert und insbesondere die oben beschriebenen Probleme bei der Umformung von Materialbögen aus Naturfasern beseitigt.

### Kurzer Abriss

Zur Lösung wenigstens der oben genannten Aufgabe wird gemäß einem ersten Aspekt ein Formwerkzeug zur Umformung eines Materialbogens in wenigstens einen dreidimensionalen Artikel bereitgestellt, wobei das Formwerkzeug dazu ausgebildet ist, wahlweise einen geöffneten und einen geschlossenen Zustand einzunehmen, wobei das Formwerkzeug umfasst: ein erstes Werkzeugteil und ein mit dem ersten Werkzeugteil zusammenwirkendes zweites Werkzeugteil, wobei im geschlossenen Zustand des Formwerkzeugs die beiden Werkzeugteile aufeinander zubewegt sind, und wobei im geöffneten Zustand des Formwerkzeugs die beiden Werkzeugteil voneinander wegbewegt sind; eine im ersten Werkzeugteil angeordnete erste Formhälfte und eine im zweiten Werkzeugteil angeordnete zweite Formhälfte, wobei die beiden Formhälften zur Umformung des zwischen den beiden Werkzeugteilen angeordneten Materialbogens in wenigstens einen dreidimensionalen Artikel ausgebildet sind, wenn die beiden Werkzeugteile aufeinander zubewegt werden; und eine Schneideinrichtung umfassend wenigstens ein Schneidelement und wenigstens eine mit dem wenigstens einen Schneidelement gekoppelte Betätigungseinrichtung, wobei die wenigstens eine Betätigungseinrichtung dazu ausgebildet ist, das wenigstens eine Schneidelement in Richtung des zwischen den beiden Werkzeugteilen angeordneten Materialbogens auszurücken, um den Materialbogen zu schneiden, wobei sich das Formwerkzeug dabei im geöffneten Zustand oder in einem teilweise geöffneten Zustand befindet.

Das Schneiden kann insbesondere ein Vorschneiden des Materialbogens umfassen. Das Schneiden kann aber auch ein vollständiges Schneiden (Fertigschneiden) des Materialbogens umfassen (um beispielsweise die ausgeformten Artikel vom Restgitter des Materialbogens zu trennen). Insbesondere kann das Schneiden auch ein Vorschneiden und Fertigschneiden des Materialbogens umfassen, um einerseits den Materialbogen für das Ausformen der Artikel vorzuschneiden und andererseits den ausgeformten Artikel vollständig von dem Materialbogen (bzw. dem Restgitter des Materialbogens) zu trennen.

Das erste Werkzeugteil kann als oberes Werkzeugteil oder als unteres Werkzeugteil des Formwerkzeugs ausgebildet sein. Entsprechend kann das zweite Werkzeugteil als unteres Werkzeugteil oder als oberes Werkzeugteil des Formwerkzeugs ausgebildet sein. Die erste Formhälfte kann eine Positivform (Patrize) oder eine Negativform (Matrize) umfassen. Entsprechend kann die zweite Formhälfte eine zur ersten Formhälfte korrespondierende Negativform (Matrize) oder Positivform (Patrize) umfassen. Die Positivform kann wenigstens einen Formstempel umfassen. Die Negativform kann wenigstens eine zum wenigstens einen Formstempel korrespondierende Formkavität umfassen. Unabhängig von der konkreten Implementierung sind die beiden Formhälften dazu ausgebildet, im geschlossenen Zustand des Formwerkzeugs derart zusammenwirken, dass sie den dazwischen angeordneten Materialbogen zu dem wenigstens einen gewünschten dreidimensionalen Artikel umformen.

Nachfolgend werden die Begriffe "geöffneter Zustand" und "geschlossener Zustand" weiter definiert. Im "geöffneten Zustand" sind die beiden Werkzeugteile (und somit auch die beiden Formhälften) des Formwerkzeugs voneinander wegbewegt. In diesem Zustand kann ein Materialbogen zwischen den beiden Werkzeugteilen bzw. Formhälften angeordnet werden (beispielsweise mit Hilfe einer Fördereinrichtung). Ferner kann im geöffneten Zustand ein im Formwerkzeug ausgeformter Artikel aus dem Formwerkzeug entnommen werden (beispielsweise mit Hilfe einer Entnahmeeinrichtung). Im "geschlossenem Zustand" sind hingegen beide Werkzeugteile (und somit auch die in den beiden Werkzeugteilen angeordneten Formhälften) aufeinander zubewegt. Im geschlossenen Zustand nehmen die beiden Formhälften ihre endgültige Formstellung ein, bei der der Artikel seine endgültige Form erhält.

Mit "teilweise geöffnetem Zustand" ist ein Zustand des Formwerkzeugs gemeint, bei dem die beiden Werkzeugteile (und ihre Formhälften) zumindest noch so weit auseinander liegen, dass der dazwischen angeordnete Materialbogen durch die beiden Formhälften noch nicht (nennenswert) verformt bzw. umgeformt wird. Das wenigstens eine Schneidelement kann soweit ausgerückt werden, bis es mit wenigstens einem gegenüberliegend angeordneten Gegenschneidelement des Formwerkzeugs in Kontakt kommt und den dazwischen liegenden Materialbogen schneidet (bzw. stanzt). Alternativ kann das wenigstens eine Schneidelement bis zu einer vorgegebenen Position ausgerückt werden. Anschließend kann das dem wenigstens einen Schneidelement gegenüberliegende Werkzeugteil mit dem wenigstens einen Gegenschneidelement soweit auf das wenigstens eine Schneidelement zu bewegt werden, bis das wenigstens eine Gegenschneidelement mit dem wenigstens einen Schneidelement in Kontakt kommt und den zwischen dem Gegenschneidelement und Schneidelement angeordneten Materialbogen schneidet (bzw. stanzt). Die vorgegebene Ausrückposition kann unmittelbar unterhalb oder oberhalb des Materialbogens liegen. Durch das Ausrücken des wenigstens einen Schneidelements ist es möglich den Materialbogen (lokal) zu schneiden (vorzuschneiden), bevor der Materialbogen (nennenswert) umgeformt wird.

Die wenigstens eine Betätigungseinrichtung kann ferner dazu ausgebildet sein, das wenigstens eine Schneidelement nach dem Schneiden (Vorschneiden) des Materialbogens wieder einzurücken. Nach dem Einrücken des wenigstens einen Schneidelements können sich die beiden Werkzeugteile und ihre Formhälften weiter aufeinander zubewegen und dabei den Materialbogen zu dem wenigstens einen Artikel umformen.

Das wenigstens eine Schneidelement kann derart ausgebildet und im Formwerkzeug angeordnet sein, dass es in der ausgerückten Position den Materialbogen am äußeren Rand des zu formenden Artikels oder in der Nähe des äußeren Randes des zu formenden Artikels zumindest teilweise vorschneidet oder schneidet. Das teilweise Vorschneiden kann ein lokal begrenztes Schneiden des Materialbogens in Bereichen umfassen, in denen beim Umformprozess hohe Verformungskräfte (Zugspannungen) auftreten (beispielsweise an den Außenrändern des Artikels). Alternativ ist auch denkbar, dass der wenigstens eine Artikel in Umfangsrichtung ganz vorgeschnitten wird. In diesem Fall entspricht der Vorschnitt gleich einem Endschnitt, bei dem der auszuformende Artikel vom restlichen Materialbogen getrennt wird. In beiden Fällen wird der Schnitt mit dem wenigsten einen Schneidelement im Wesentlichen vor der Umformung des Materialbogens zu dem wenigstens einen dreidimensionalen Artikeln durchgeführt. Durch das hier beschriebene Vorschneiden des Materialbogens vor dem Umformen wird der umzuformende Materialbogen gewissermaßen "flexibilisiert". Der Materialbogen kann leichter umgeformt werden und es wirken geringere Verformungskräfte auf den Materialbogen, wodurch das Auftreten unkontrollierter Risse im Materialbogen eliminiert bzw. zumindest stark reduziert wird.

Alternativ ist auch denkbar, dass der wenigstens eine Artikel nach seiner Umformung mit Hilfe des wenigstens einen ausrückbaren Schneidelements aus dem Materialbogen ausgeschnitten (fertiggeschnitten) wird. Das Ausschneiden (Fertigschneiden) kann hierbei bei teilweise oder ganz geöffnetem Formwerkzeug durch Ausrücken des entsprechenden Schneidelements erfolgen.

Das wenigstens eine Schneidelement kann im ersten Werkzeugteil und/oder im zweiten Werkzeugteil angeordnet sein. Insbesondere kann das wenigstens eine Schneidelement in der Nähe der ersten Formhälfte und/oder zweiten Formhälfte angeordneten sein. Das wenigstens eine Schneidelement ist somit ein Teil des Formwerkzeugs, womit eine besonders kompakte Bauweise realisiert wird.

Die wenigstens eine Betätigungseinrichtung, welche zum Ein- und Ausrücken des wenigstens einen Schneidelements vorgesehen ist, kann ebenso im ersten Werkzeugteil und/oder im zweiten Werkzeugteil angeordnet sein. Die wenigstens eine Betätigungseinrichtung kann somit ebenso ein Bestandteil des Formwerkzeuges sein. Auf diese Weise wird eine besonders kompakte Bauweise realisiert, so dass das Formwerkzeug in einer herkömmliche Formmaschine/Formpresse montiert werden kann.

Die Schneideinrichtung kann ferner ein mit dem wenigstens einen Schneidelement zusammenwirkendes Gegenschneidelement umfassen. Dieses Gegenschneidelement kann in dem wenigstens einen Schneidelement gegenüberliegenden Werkzeugteil angeordnet sein. Ist das Schneidelement im ersten Werkzeugteil angeordnet, so kann das Gegenschneidelement im gegenüberliegenden zweiten Werkzeugteil angeordnet sein. Ist hingegen das wenigstens eine Schneidelement im zweiten Werkzeugteil angeordnet, so kann das Gegenschneidelement im ersten Werkzeugteil angeordnet sein.

Das wenigstens eine ausrückbare Schneidelement kann wenigstens ein Schneidmesser umfassen. Das Schneidmesser kann beispielsweise ein Keilschneidmesser oder ein anderweitiges Messer umfassen. Das Gegenschneidelement kann eine mit dem wenigstens einen Schneidmesser zusammenwirkende Schneidauflage umfassen.

Die wenigstens eine Betätigungseinrichtung kann einen Aus-und Einrückmechanismus umfassen. Dieser ist dazu vorgesehen, das wenigstens eine Schneidelement bei Bedarf auszurücken und wieder einzurücken. Hierzu kann der Aus- und Einrückmechanismus mit dem wenigstens einen Schneidelement mechanisch gekoppelt sein. Zur Kopplung kann beispielsweise ein Trägerelement oder eine Trägerplatte vorgesehen, die das wenigstens eine Schneidelement an einer Seite aufnimmt und an der gegenüberliegenden Seite mit dem Ein- und Ausrückmechanismus in Kontakt ist. Der Ein- und Ausrückmechanismus kann in Form einer pneumatisch oder hydraulisch betätigbaren Kolben-Zylinder-Einrichtung implementiert sein. Alternativ ist auch denkbar, dass der Ein- und Ausrückmechanismus in Form einer elektromechanischen Betätigungseinrichtung implementiert ist.

Ferner kann die wenigstens eine Betätigungseinrichtung einen Stützmechanismus umfassen. Der Stützmechanismus kann dazu vorgesehen sein, das wenigstens eine Schneidelement während des Schneidvorgangs zu stützen. Der Stützmechanismus dient zur Entlastung des Aus- und Einrückmechanismus, da beim Schneiden (Stanzen) erhebliche Druckkräfte auf das wenigstens eine Schneidelement und den mit dem wenigstens einen Schneidelement gekoppelten Aus-und Einrückmechanismus wirken.

Das Formwerkzeug kann zusätzlich zu dem oben beschriebenen ausrückbaren Schneidelement wenigstens eine im ersten und/oder zweiten Werkzeugteil angeordnete Schneidlinie umfassen. Die wenigstens eine im ersten und/oder zweiten Werkzeugteil angeordnete Schneidlinie kann dazu ausgelegt sein, nach dem Umformvorgang den wenigstens einen ausgeformten Artikel vom Materialbogen zu trennen (vollständig auszuschneiden). Die wenigstens eine Schneidlinie kann in Form einer Bandstahllinie ausgebildet sein.

Wenn das vollständige Ausschneiden des wenigstens einen ausgeformten Artikels vom Materialbogen durch die oben beschriebene Schneideinrichtung mit dem wenigstens einen ausrückbaren Schneidelement erfolgt, kann die zusätzlich am ersten und/oder zweiten Werkzeugteil angeordnete Schneidlinie/Schneidkante auch entfallen.

Der umzuformende Materialbogen kann vorwiegend aus Fasern, insbesondere aus Naturfasern bestehen. Die Naturfasern können Pflanzenfasern oder Fasern tierischen Ursprungs sein. Insbesondere können die Fasern Zellulosefasern sein.

Gemäß einem weiteren Aspekt der Erfindung wird eine Verwendung des oben genannten Formwerkzeugs zur Herstellung wenigstens eines dreidimensionalen Artikels aus einem flächenförmigen Materialbogen bereitgestellt. Der Materialbogen kann hierbei insbesondere aus Naturfasern bestehen. Gemäß einer Implementierung können die Naturfasern Zellulose umfassen. Der Artikel kann beispielsweise ein Behälter, ein Becher, eine Kapsel, ein Deckel oder ein anderweitiger dreidimensionaler Artikel sein.

Gemäß einem weiteren Aspekt der Erfindung wird eine Formmaschine, insbesondere eine Formpresse, zur Herstellung wenigstens eines Artikels aus einem flächenförmigen Materialbogen bereitgestellt. Die Formmaschine umfasst das oben beschriebene Formwerkzeug mit einem ersten Formwerkzeugteil und einem zweiten Formwerkzeugteil; einen Obertisch zur Aufnahme des ersten Formwerkzeugteils, und einen Untertisch zur Aufnahme des zweiten Formwerkzeugteils, wobei der Obertisch und/oder der Untertisch beweglich gelagert ist/sind.

Die Formmaschine kann dazu ausgelegt sein, einen vorgegebenen Formdruck auf das Formwerkzeug zu übertragen. Ferner kann die Formmaschine eine Fördereinrichtung umfassen, welche dazu ausgebildet ist, den Materialbogen dem Formwerkzeug (intermittierend) zuzuführen.

Gemäß einem weiteren Aspekt der Erfindung wird ein Verfahren zum Herstellen wenigstens eines dreidimensionalen Artikels, insbesondere eines Bechers, aus einem flächenförmigen Materialbogen bereitgestellt, wobei das Verfahren folgende Schritte umfasst: Bereitstellen des oben genannten Formwerkzeuges; Anordnen des flächenförmigen Materialbogens zwischen den beiden Formhälften des Formwerkzeugs; Ausrücken des wenigstens einen Schneidelements des Formwerkzeugs in Richtung des zwischen den beiden Werkzeugteilen angeordneten Materialbogens; Schneiden des Materialbogens mit Hilfe des wenigstens einen Schneidelements bei geöffnetem oder zumindest teilweise geöffnetem Formwerkzeug; Einrücken des wenigstens einen Schneidelements, nachdem der Materialbogen geschnitten wurde; und anschließendes Schließen des Formwerkzeuges und Umformen des Materialbogens zu wenigstens einem dreidimensionalen Artikel.

Der Materialbogen kann insbesondere ein flächenförmiger Materialbogen aus Naturfasern, insbesondere aus Zellulosefasern, sein.

Der Schritt des Anordnens des flächenförmigen Materialbogens zwischen den beiden Formhälften kann immer dann erfolgen, wenn das Formwerkzeug im geöffneten Zustand ist, d.h. wenn die beiden Werkzeugteile mit den entsprechenden Formhälften voneinander wegbewegt sind, wie weiter oben beschrieben wurde. Der flächenförmige Materialbogen kann mit Hilfe einer Fördereinrichtung (intermittierend) dem Formwerkzeug zugeführt und somit zwischen den beiden Werkzeugteilen angeordnet werden.

Der Schritt des Ausrückens des wenigstens einen Schneidelements kann ein Positionieren des wenigstens einen Schneidelements unmittelbar unterhalb oder oberhalb des Materialbogens umfassen. Mit "unmittelbar unterhalb oder oberhalb des Materialbogens" kann eine Position gemeint sein, bei der das wenigstens eine Schneidelement im ausgerückten Zustand in unmittelbarer Nähe unterhalb oder oberhalb des zwischen den beiden Werkzeugteilen angeordnete Materialbogen positioniert ist, ohne diesen zu berühren. Ferner kann der anschließende Schritt des Schneidens mit Hilfe des wenigstens einen Schneidelements ein Bewegen des dem wenigstens einen Schneidelements gegenüberliegenden Werkzeugteils in Richtung des ausgerückten Schneidelements umfassen, bis das wenigstens eine Gegenschneidelement (bzw. die Schneidauflage des Gegenschneidelements) in Kontakt mit dem wenigstens einen Schneidelement kommt. Durch die Kontaktierung von Schneidelement und Schneidauflage des Gegenschneidelements wird der dazwischen liegende Materialbogen im Bereich des Schneidelements durchtrennt.

Der Schritt des Schneidens mit Hilfe des ausrückbaren Schneidelements kann somit ein Vorschneiden des Materialbogens an vorgegebenen Positionen umfassen, um einer unkontrollierten Rissbildung im anschließenden Umformprozess vorzubeugen. Das Vorschneiden des Materialbogens kann in lokal begrenzten Bereichen des Materialbogens erfolgen, die in unmittelbarer Nähe des Becherrandes liegen. Der endgültige Schnitt zur Trennung des ausgeformten Artikels von dem Materialbogen kann in einem nachfolgenden Schneiden mit einer vom ausrückbaren Schneidelement verschiedenen Schneidlinie erfolgen, wenn das Werkzeug geschlossen ist (sogenannter Fertigschnitt).

Der Schritt des Einrückens des wenigstens einen ausgerückten Schneidelements kann ein geringfügiges Wegbewegen des Werkzeugteils mit dem Gegenschneidelement von dem Werkzeugteil mit dem wenigstens einen Schneidelement umfassen, um das wenigstens eine Schneidelement für das Einrücken freizugeben. Alternativ ist auch denkbar, dass das wenigstens eine Schneidelement eingerückt wird, ohne dass sich das dem wenigstens einen Schneidelement gegenüberliegende Werkzeugteil von diesem wegbewegt. Nach dem Einrücken oder noch während des Einrückens können die beiden Werkzeugteile aufeinander zubewegt werden, um in die endgültige Formstellung überführt zu werden.

Gemäß einem weiteren Aspekt der Erfindung wird ein Verfahren zum Herstellen wenigstens eines dreidimensionalen Artikels, insbesondere eines Bechers, aus einem flächenförmigen Materialbogen bereitgestellt, wobei das Verfahren folgende Schritte umfasst: Bereitstellen des oben genannten Formwerkzeuges; Anordnen des flächenförmigen Materialbogens zwischen den beiden Formhälften des Formwerkzeugs; Schließen des Formwerkzeuges und Umformen des Materialbogens zu wenigstens einem dreidimensionalen Artikel; Ausrücken des wenigstens einen Schneidelements des Formwerkzeugs; und Ausschneiden, mit Hilfe des wenigstens einen ausgerückten Schneidelements, des wenigstens einen dreidimensionalen Artikels aus dem Materialbogen.

Das wenigstens eine Schneidelement des Formwerkzeugs kann bei geöffnetem oder zumindest teilweise geöffnetem Formwerkzeug ausgerückt werden.

Der Schritt des Ausschneidens des wenigstens einen dreidimensionalen Artikels erfolgt ebenso bei geöffnetem oder zumindest teilweise geöffnetem Formwerkzeug. Durch Bewegen von wenigstens einem der beiden Formwerkzeugteile kann das wenigstens eine ausgerückte Schneidelement gegen das dem wenigstens einen Schneidelement gegenüberliegend angeordnete Gegenschneidelement verfahren werden, wodurch der zwischen dem wenigstens einen ausgerückten Schneidelement und Gegenschneidelement angeordnete Materialbogen mit ausgeformtem Artikel/ausgeformten Artikeln geschnitten wird. Alternativ kann das wenigstens eine Schneidelement so weit ausgerückt werden, bis es mit dem gegenüberliegenden Gegenschneidelement in Kontakt kommt, wodurch der dazwischen angeordnete Materialbogen mit ausgeformtem Artikel/ausgeformten Artikeln geschnitten wird.

Das ausgerückte Schneidelement kann nach dem Ausschneiden des wenigstens einen dreidimensionalen Artikels wieder eingerückt werden.

### Kurze Figurenbeschreibung

Weitere Einzelheiten und Vorteile der Erfindung werden anhand der in Zusammenhang mit den Figuren gezeigten Ausführungsformen weiter beschrieben. Es zeigen:
- Figur 1: eine Darstellung eines Formwerkzeugs gemäß der vorliegenden Erfindung;
- Figur 2: ein Flussdiagramm zur Veranschaulichung eines Verfahrens zum Umformen von flächenförmigen Materialbögen gemäß der vorliegenden Erfindung;
- Figuren 3a bis 3j: Darstellungen eines weiteren Formwerkzeugs zur Umformung eines Materialbogens; und
- Figur 4: Darstellungen eines weiteren Formwerkzeugs zur Umformung eines Materialbogens.

### Detaillierte Beschreibung

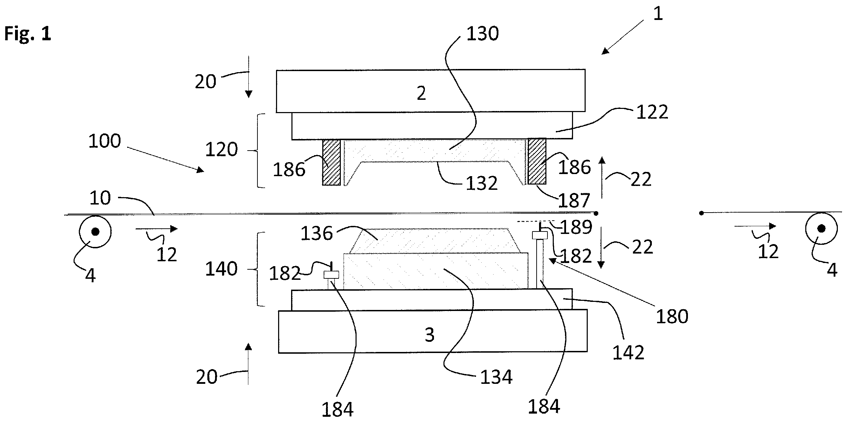

Figur 1 zeigt ein erfindungsgemäßes Formwerkzeug 100, das in einer Formmaschine 1 eingebaut ist. Die Formmaschine 1 ist durch einen Obertisch 2 und einen Untertisch 3 lediglich schematisch angedeutet.

Das Formwerkzeug 100 umfasst ein erstes Werkzeugteil 120 sowie ein zweites Werkzeugteil 140. In der in Figur 1 gezeigten Implementierung ist das erste Werkzeugteil 120 als oberes Werkzeugteil und das zweite Werkzeugteil 140 als unteres Werkzeugteil des Formwerkzeugs 100 ausgebildet. Das erste Werkzeugteil 120 ist am Obertisch 2 und das zweite Werkzeugteil 140 am Untertisch 3 der Formmaschine 1 gelagert. Wie ferner aus der Figur 1 durch die Pfeile 20 und 22 angedeutet ist, kann wenigstens einer der beiden Tische 2 und 3 in vertikaler Richtung (also senkrecht zu den Ebenen der beiden Tische 2, 3) verfahrbar sein. Somit sind die beiden Werkzeugteile 120, 140 in der Formmaschine 1 beweglich gelagert. Sie können aufeinander zubewegt werden (dargestellt durch die Pfeile 20 links) oder wieder voneinander weg bewegt werden (dargestellt durch die Pfeile 22 rechts). Entsprechend kann das Formwerkzeug 100 einen geschlossenen Zustand (Stellung) einnehmen, wenn die beiden Werkzeugteile 120, 140 (vollständig) aufeinander zubewegt sind, oder einen geöffneten Zustand (Stellung) einnehmen, wenn die beiden Werkzeugteile 120, 140 (vollständig) voneinander wegbewegt sind. In der in Figur 1 gezeigten Darstellung befindet sich das Formwerkzeug 100 im geöffneten Zustand, d.h. die beiden Werkzeugteile 120, 140 sind voneinander wegbewegt.

Das erste Werkzeugteil 120 umfasst eine erste Formhälfte 130 (nachfolgend auch obere Formhälfte 130 genannt), die als Negativform (Matrize) ausgebildet ist und wenigstens eine Kavität 132 aufweist. Die erste Formhälfte 130 ist auf einer ersten Trägereinrichtung 122 des ersten Werkzeugteils 120 gelagert. Das zweite Werkzeugteil 140 umfasst eine zur ersten Formhälfte 130 korrespondierende zweite Formhälfte 134, die als Positivform (Patrize) ausgebildet ist und wenigstens einen zur Kavität 132 korrespondierenden Stempel 136 aufweist. Die zweite Formhälfte 134 ist auf einer zweiten Trägereinrichtung 142 des zweiten Werkzeugteils 140 gelagert. Auf die konkrete Ausgestaltung der beiden Formhälften 130, 134 kommt es für die vorliegende Erfindung nicht an. Gemäß einer alternativen Implementierung ist auch denkbar, dass die erste Formhälfte 130 als Patrize und die zweite Formhälfte 134 als Matrize ausgebildet ist. Entscheidend ist lediglich, dass die beiden Formhälften 130, 134 im geschlossenen Zustand derart zusammenwirken, dass sie einen zwischen den beiden Formhälften 130, 134 gelagerten Materialbogen 10 zu dem wenigstens einen gewünschten Artikel umformen.

Der umzuformende Materialbogen 10 kann aus Naturfasern oder einem anderweitigen recyclebaren Material sein. Als Naturfasern können Pflanzenfasern oder Fasern tierischen Ursprungs zum Einsatz kommen. Insbesondere kann der Materialbogen Fasern aus Zellulose aufweisen.

Wie ferner in der Figur 1 angedeutet ist, kann der umzuformende Materialbogen 10 mit Hilfe einer Fördereinrichtung 4 (intermittierend) dem Formwerkzeug 100 zugeführt werden. Die Fördereinrichtung 4 kann Teil der Formmaschine 1 sein und ist in Figur 1 nur schematisch durch zwei Rollen (siehe Rollen 4) angedeutet. Die Beförderungsrichtung ist durch die Pfeile 12 angedeutet.

Das Formwerkzeug 100 umfasst ferner eine Schneideinrichtung 180. Die Schneideinrichtung 180 umfasst wenigstens ein Schneidelement 182 und wenigstens eine mit dem wenigstens einen Schneidelement 182 gekoppelte Betätigungseinrichtung 184. Die wenigstens eine Betätigungseinrichtung 184 ist dazu vorgesehen, das wenigstens eine Schneidelement 182 wahlweise in Richtung des umzuformenden Materialbogens 10 auszurücken bzw. wieder einzurücken. Die Ausrückposition 189 des wenigstens einen Schneidelements 182 ist in der Figur rechts dargestellt. Links in der Figur 1 ist das wenigstens eine Schneidelement 182 in seiner eingerückten Position zu sehen. Durch das Ausrücken des wenigstens einen Schneidelements 182 ist es möglich, den Materialbogen 10 zu schneiden, insbesondere vorzuschneiden, noch bevor der Materialbogen 10 eine nennenswerte Umformung erfahren hat. Denkbar ist auch eine Ausgestaltung des wenigstens einen Schneidelements 182 derart, dass mit Hilfe des wenigstens einen ausrückbaren Schneidelements 182 der wenigstens eine in dem Materialbogen 10 ausgeformte Artikel vollständig ausgeschnitten werden kann. Dieser Schneidprozess oder Ausschneidprozess wird in Zusammenhang mit den nachfolgenden Figuren weiter unten noch im Detail beschrieben.

Das wenigstens eine Schneidelement 182 und die wenigstens eine Betätigungseinrichtung 184 sind im unteren Werkzeugteil 140 angeordnet. Denkbar ist jedoch auch eine Anordnung im oberen Werkzeugteil 120. Unabhängig von der Anordnung im unteren Werkzeugteil 140 oder oberen Werkzeugteil 120 ist das wenigstens eine Schneidelement 182 in der Nähe der zweiten Formhälfte 134 oder ersten Formhälfte 130 derart angeordnet, dass das wenigstens eine Schneidelement 182 in ausgerückter Position den Materialbogen 10 in der Nähe des zu formenden Artikels 10 schneidet, insbesondere vorschneidet. Insbesondere kann das wenigstens eine Schneidelement 182 bezüglich der Formhälften 130, 134 derart ausgerichtet sein, dass es den Materialbogen 10 lokal in jenen Bereichen (Positionen) vorschneidet, wo beim anschließenden Umformprozess starke Verformungen und somit starke Verformungskräfte (Zugkräfte) auftreten. Derartige Bereiche starker Verformung und somit hoher Verformungskräfte sind beispielsweise die Eckbereiche eines Artikels. Durch lokales Vorschneiden des Materialbogens in den Eckbereich kann der Materialbogen 10 lokal "flexibilisiert" werden, wodurch die beim Umformen auftretenden Zugkräfte deutlich reduziert und somit unkontrollierte Rissbildungen im Materialbogen 10 verhindert werden können.

Neben dem hier beschriebenen lokalen Schneiden bzw. Vorschneiden ist auch denkbar, dass das wenigstens eine Schneidelement 182 derart ausgebildet und angeordnet ist, dass es den Materialbogen 10 entlang oder in der Nähe des äußeren Umfangrandes des zu formenden Artikels vollständig schneidet. In dieser Implementierung ist der Schnitt ein Endschnitt, bei dem der in den Artikel umzuformende oder umgeformte Materialbogenbereich vom restlichen Materialbogen getrennt wird, bevor/nachdem er umgeformt wird/wurde. Entsprechend ist das wenigstens eine Schneidelement 182 derart ausgebildet und am unteren Werkzeugteil 140 oder oberen Werkzeugteil 120 angeordnet, dass es die entsprechenden Formhälften 130 bzw. 134 entlang ihres Außenumfangs (vollständig) umgibt.

Die Schneideinrichtung 180 kann ferner wenigstes ein Gegenschneidelement 186 umfassen. Das wenigstens eine Gegenschneidelement 186 ist dem wenigstens einen Schneidelement 182 gegenüberliegend angeordnet. In der in der Figur 1 gezeigten Implementierung ist das wenigstens eine Gegenschneidelement 186 am oberen Werkzeugteil 120 angeordnet. Ist abweichend von der in der Figur 1 gezeigten Implementierung das wenigstens eine Schneidelement 182 im oberen Werkzeugteil 120 angeordnet, so ist das Gegenschneidelement 186 gegenüberliegend am unteren Werkzeugteil 140 angeordnet. Das wenigstens eine Gegenschneidelement 186 umfasst wenigstens eine Gegenschneidauflage 187, gegen die das wenigstens eine Schneidelement 182 beim Schneiden des Materialbogens gedrückt wird.

Figur 1 zeigt der Einfachheit halber das Formwerkzeug 100 mit lediglich einer Form. Es versteht sich, dass das hier beschriebene Formwerkzeug 100 auch ein Mehrfachwerkzeug sein kann, umfassend eine Vielzahl von (gleichen oder zueinander verschiedenen) Formen mit entsprechenden Formkavitäten 132 und dazu korrespondierenden Formstempeln 136. Diese sind im oberen Werkzeugteil 120 und dem unteren Werkzeugteil 140 nebeneinander (beispielsweise in Matrixform) angeordnet. Bei einem derartigen Mehrfachwerkzeug wird für jede Form wenigstens ein Schneidelement 182 bereitgestellt. Die den jeweiligen Formen zugeordneten Schneidelemente 182 können durch eine gemeinsame Betätigungseinrichtung gemeinsam betätig (also ausgerückt und wieder eingerückt) werden. Alternativ ist auch denkbar, dass für jede Form eine separate Betätigungseinrichtung 184 zur Betätigung des zur jeden Form gehörigen Schneidelements 182 vorgesehen ist.

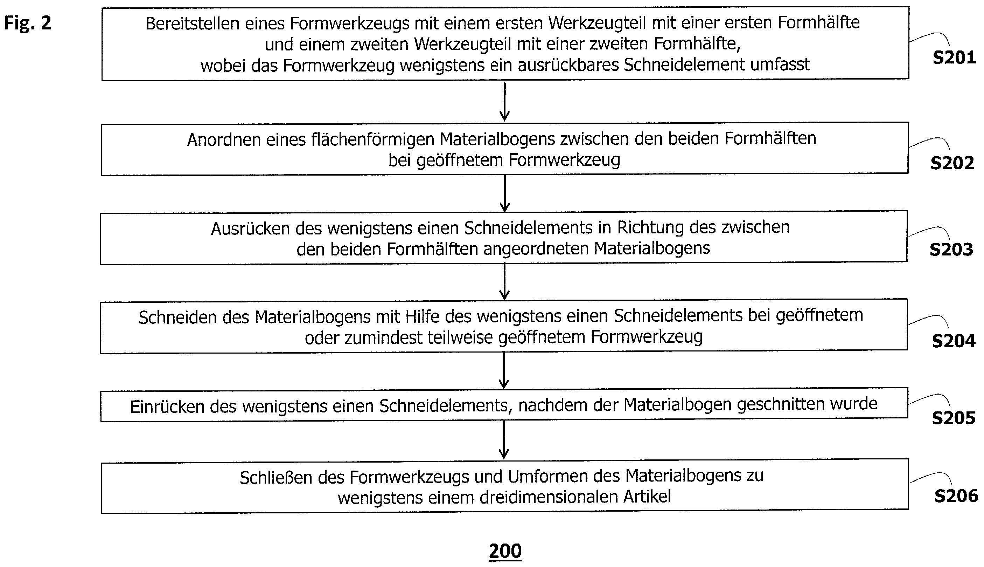

Eine Funktion des in Zusammenhang mit Figur 1 beschriebenen Formwerkzeugs 100 wird anhand des Flussdiagramms in Figur 2 weiter beschrieben. Figur 2 beschreibt ein Verfahren 200 zum Herstellen wenigstens eines Artikels, wobei das Verfahren 200 mit Hilfe des Werkzeugs 100 durchgeführt wird.

In einem ersten Schritt S201 des Verfahrens 200 wird das oben beschriebene Formwerkzeug 100 bereitgestellt. Das Bereitstellen kann ein Montieren des Formwerkzeugs 100 in einer Formmaschine 1 (Formpresse) umfassen. Die beiden Werkzeugteile 120, 140 sind in der Formmaschine 1 des Formwerkzeugs 100 verschiebbar zueinander gelagert. Mit verschiebbar gelagert ist gemeint, dass wenigstens eines der beiden Werkzeugteile 120, 140 mit seinen Formhälften 130, 134 bewegbar ist, so dass das Formwerkzeug 100 taktweise in einen geöffnet Zustand und in einen geschlossen Zustand übergehen kann.

Im geöffneten Zustand des Formwerkzeugs 100 (also, wenn die beiden Werkzeugteile 120, 140 auseinanderbewegt sind) wird in einem nächsten Schritt S202 ein flächenförmiger Materialbogen 10 zwischen den beiden Werkzeugteilen 120, 140 (bzw. deren Formhälften 130, 140) angeordnet. Die Anordnung kann mit Hilfe einer Fördereinrichtung 4, wie in Zusammenhang mit der Figur 1 kurz beschrieben, erfolgen. Figur 1 zeigt das Formwerkzeug 100 im geöffneten Zustand sowie die Anordnung des umzuformenden Materialbogens 10 zwischen den beiden Werkzeugteilen 120, 140.

Im einem darauffolgenden Schritt S203 wird bei geöffnetem oder noch teilweise geöffnetem Formwerkzeug 100 das wenigstens eine im Formwerkzeug 100 angeordnete Schneidelement 182 in Richtung des zwischen den beiden Werkzeugteilen 120, 140 angeordneten Materialbogens 10 ausgerückt. Das Ausrücken erfolgt mit Hilfe der in Figur 1 beschriebenen Betätigungseinrichtung 184 im Wesentlichen senkrecht zur Vorschubrichtung des Materialbogens 10. Die Vorschubrichtung ist in der Figur 1 mit den Pfeilen 12 angedeutet.

Im anschließenden Schritt S204 wird der Materialbogen 10 mit Hilfe des wenigstens einen Schneidelements 182 geschnitten. Der Schritt des Schneidens erfolgt, wenn das wenigstens eine Schneidelement 182 in Anlage mit dem wenigstens einen gegenüberliegenden Gegenschneidelement 186 (bzw. seiner Gegenschneidauflage 187) gebracht wird. Dies kann geschehen, indem beispielsweise das wenigstens eine Schneidelement 182 soweit ausgerückt wird, bis es mit dem wenigstens einen Gegenschneidelement 186 (bzw. der Gegenschneidauflage 187 des Gegenschneidelements 186) in Anlage kommt. Alternativ kann das wenigstens eine Schneidelement 182 bis zu einer vorgegebenen Position (knapp) unterhalb oder oberhalb des Materialbogens 10 ausgefahren werden (siehe Position 189 in Figur 1) und anschließend das untere Werkzeugteil 140 in Richtung des oberen Werkzeugteils 120 oder das obere Werkzeugteil 120 in Richtung des unteren Werkzeugteils 140 oder beide Werkzeugteile 120, 140 zueinander so lange verfahren werden, bis das wenigstens eine Schneidelement 182 in Anlage mit dem korrespondierenden Gegenschneidelement 186 (bzw. seiner Schneidauflage 187) kommt. Kommt das wenigstens eine Schneidelement 182 in Anlage mit dem gegenüberliegenden Gegenschneidelement 186, wird an entsprechenden Positionen der dazwischen angeordnete Materialbogen 10 geschnitten bzw. gestanzt. Da das wenigstens eine Schneidelement 182 mit Hilfe der wenigstens einen Betätigungseinrichtung 184 ausgerückt ist, erfolgt dieser Schnitt bei geöffnetem bzw. zumindest noch teilweise geöffnetem Formwerkzeug 100. Mit teilweise geöffnetem Formwerkzeug 100 ist ein Zustand gemeint, bei dem die beiden Werkzeughälften 120, 140 zumindest noch so weit auseinander liegen, dass sie den dazwischen liegenden Materialbogen 10 nicht wesentlich verformen bzw. umformen.

Im darauffolgenden Schritt S205 wird nach Schneiden (Vorschneiden) des Materialbogens 10 mit Hilfe des wenigstens einen Schneidelements 182 das wenigstens eine Schneidelement 182 wieder eingerückt. Der Schritt des Einrückens S205 erfolgt mit Hilfe der wenigstens einen Betätigungseinrichtung 184, die von ihrem ausgerückten Zustand in den eingerückten Zustand (Grundzustand) zurückkehrt.

Im anschließenden Schritt S206 wird das Formwerkzeug 100 geschlossen, d.h., die beiden Formwerkzeugteile 120, 140 werden vollständig aufeinander zubewegt. Dadurch wird der zwischen den beiden Formhälften 130, 134 angeordnete Materialbogen 10 zu einem dreidimensionalen Artikel umgeformt. Beim Umformen kann der umzuformende Materialbogen auf eine gewünschte Formtemperatur erhitzt werden. Typische Formtemperaturen zur Umformung von Materialbögen aus Naturfasern liegen im Bereich von 50 °C bis 300 °C. Die gewünschte Formtemperatur kann durch eine im Formwerkzeug 100 angeordnete Heizeinrichtung erzeugt werden. Ferner kann mittels der Formmaschine 1 ein gewünschter Formdruck auf das Formwerkzeug 100 ausgeübt werden. Typische Formdrücke bei Materialbögen aus Naturfasern liegen im Bereich von 1 MPa bis 100 MPa. Die konkrete Formtemperatur und Formdruck werden abhängig vom Material des umzuformenden Materialbogens 10 sowie von der Geometrie des zu erzeugenden Artikels individuell eingestellt. Der erzeugte Artikel kann ein Behälter, Becher oder Kapsel zur Portionierung von Lebensmitteln sein.

Um den erzeugten Artikel von dem Materialbogen 10 zu trennen, kann im Formwerkzeug 100 zusätzlich eine Schneidlinie oder Schneidkante integriert sein. Diese ist im oberen Werkzeugteil 120 oder unteren Werkzeugteil 140 derart angebracht und ausgebildet, dass sie bei geschlossenem Formwerkzeug 100 den Materialbogen 10 entlang des Artikelaußenrandes schneidet bzw. stanzt. Alternativ ist auch denkbar, dass der Materialbogen 10 mit dem wenigstens einen ausgeformten Artikel einer nachgeordneten Stanzstation zugeführt wird, welche den wenigstens einen ausgeformten Artikel ausstanzt.

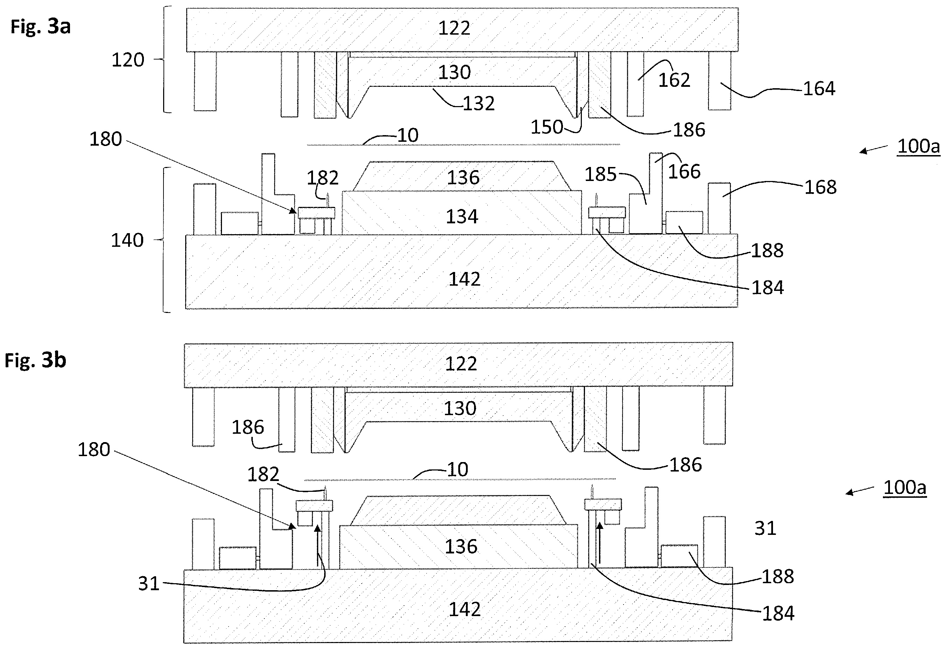

In Zusammenhang mit den Figuren 3a bis 3j wird ein Formwerkzeug 100a beschrieben, das eine Weiterbildung des in Zusammenhang mit Figur 1 besprochenen Formwerkzeugs 100 darstellt. In den Figuren 3a bis 3j werden Merkmale und Werkzeugelemente, die ähnlich oder identisch zum Formwerkzeug 100 in der Figur 1 sind, mit denselben Bezugszeichen versehen.

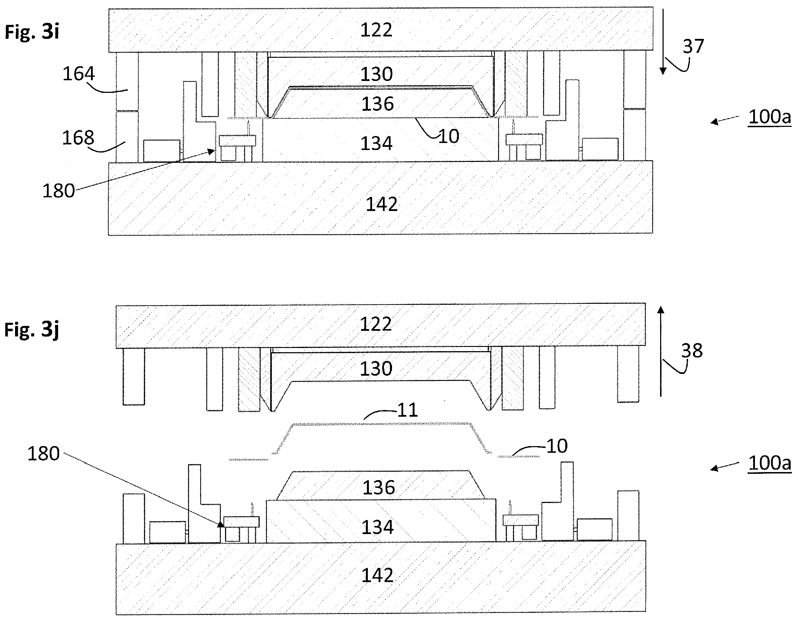

Figur 3a zeigt das Formwerkzeug 100a im geöffneten Zustand. Das Formwerkzeug 100a umfasst ein erstes (oberes) Werkzeugteil 120, das eine erste Trägereinrichtung 122 umfasst und eine auf der Trägereinrichtung 122 angeordnete erste (obere) Formhälfte 130. Die erste Formhälfte 130 ist wiederum als Negativform (Matrize) ausgebildet mit wenigstens einer Kavität 132. Die erste Trägereinrichtung 122 kann in Form einer Trägerplatte ausgebildet sein. Das obere Werkzeugteil 120 umfasst ferner wenigstens ein Gegenschneidelement 186 mit einer Schneidauflage 187, wie in Zusammenhang mit der Figur 1 besprochen. Ferner umfasst das obere Werkzeugteil 120 eine die erste Formhälfte 130 in Umfangsrichtung umgebende Schneidlinie (bzw. Schneidkante) 150, die zum Fertigschneiden eines umgeformten Artikels vorgesehen ist und in Zusammenhang mit Figur 3i weiter unten noch beschrieben wird. Ferner kann das Formwerkzeug 100a wenigstens ein oberes Anschlagelement 162 für den weiter unten beschriebenen Vorschnitt und ein oberes Anschlagelement 164 für den Fertigschnitt aufweisen.

Das Formwerkzeug 100 gemäß Figur 3a umfasst ferner ein zweites (unteres) Werkzeugteil 140, das eine zweite Trägereinrichtung 142 umfasst und eine auf der Trägereinrichtung 142 angeordnete zweite (untere) Formhälfte 134. Die zweite Formhälfte 134 ist wiederum als Positivform (Patrize) mit wenigstens einem mit der Kavität 134 zusammenwirkenden Stempel 136 ausgebildet. Die zweite Trägereinrichtung 142 kann wiederum in Form einer Trägerplatte ausgebildet sein. Das untere Werkzeugteil 140 umfasst ferner eine Schneideinrichtung 180 mit wenigstens einem Schneidelement 182 und wenigstens eine mit dem wenigstens einen Schneidelement 182 gekoppelte Betätigungseinrichtung 184. In den Figuren 3a bis 3j sind zwei Schneidelemente 182 (und zwei Betätigungseinrichtungen 184) zu sehen, welche die untere Formhälfte 134 flankieren. Es versteht sich, dass abweichend hierzu das Formwerkzeug 100a auch drei oder mehrere die untere Formhälfte 134 flankierende Schneidelemente 182 aufweisen kann. Die wenigstens eine Betätigungseinrichtung 184 kann als pneumatische, hydraulische oder elektromechanische Betätigungseinrichtung ausgebildet sein. Das wenigstens eine Schneidelement 182 kann als Schneidmesser, bevorzugt als Keilmesser, implementiert sein.

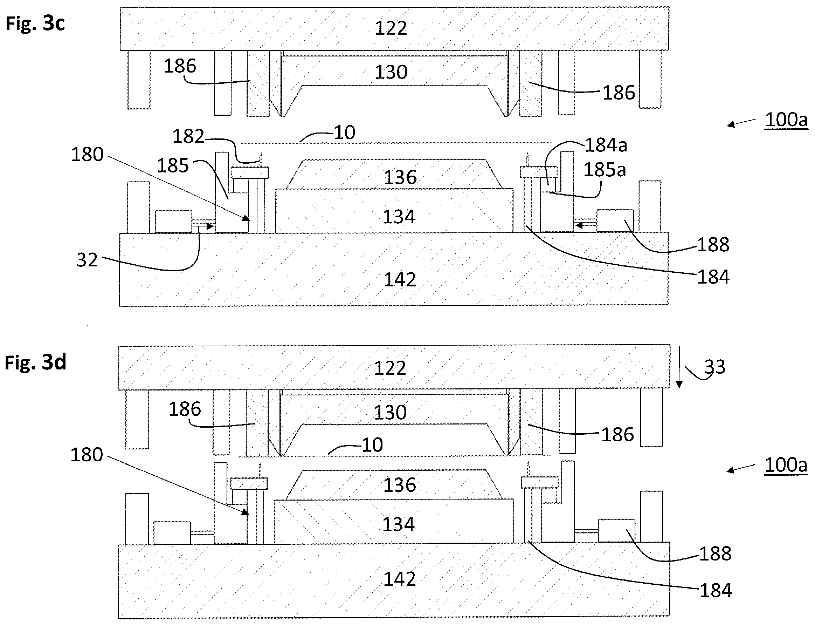

Abweichend vom Formwerkzeug 100 in der Figur 1, umfasst das Formwerkzeug 100a ferner einen Stützmechanismus. Der Stützmechanismus umfasst wenigstens ein Stützelement 185, das mit wenigstens einer zweiten Betätigungseinrichtung 188 gekoppelt ist. Die wenigstens eine zweite Betätigungseinrichtung 188 und das wenigstens eine Stützelement 185 sind im unteren Werkzeugteil 140 angeordnet. Das wenigstens eine Stützelement 185 weist eine Stützfläche 185a auf (siehe Figur 3c) sowie ein unteres Anschlagelement 166 für den Vorschnitt. Die wenigstens eine zweite Betätigungseinrichtung 188 kann wiederum als pneumatische, hydraulische oder elektromechanische Betätigungseinrichtung ausgebildet sein. Die Funktion des wenigstens einen Stützelements 185 und der wenigstens einen zweiten Betätigungseinrichtung 188 wird in Zusammenhang mit den nachfolgenden Figuren im Detail beschrieben.

Ferner kann das untere Werkzeugteil 140 wenigstens ein mit dem wenigstens einen Anschlagelement 164 des oberen Werkzeugteils 120 korrespondierendes unteres Anschlagelement 168 für den Fertigschnitt aufweisen. Die Funktion der Anschlagelemente 164 und 168 wird weiter unten näher beschrieben.

In Zusammenhang mit den Figuren 3a bis 3j wird nun die Herstellung wenigstens eines Artikels 11 (siehe Figur 3j) aus einem flächenförmigen Materialbogen 10, insbesondere aus einem Naturfaserbogen, mit Hilfe des Formwerkzeugs 100a weiter beschrieben. Die Figuren 3a bis 3j zeigen die Betätigung des Formwerkzeugs 100a während eines Umformtaktes.

In Figur 3a befindet sich das Formwerkzeug 100a im geöffneten Zustand, bei dem die beiden Werkzeugteile 120, 140 auseinander bewegt sind. Zwischen den beiden Werkzeugteilen 120, 140 wird der umzuformende Materialbogen 10 (beispielsweise mit Hilfe einer Fördereinrichtung) positioniert. Das wenigstens eine Schneidelement 182 der Schneideinrichtung 180 befindet sich in Figur 3a noch im eingerückten Zustand. Der positionierte Materialbogen 10 kann beispielsweise ein Materialbogen aus Naturfasern, insbesondere aus Zellulose, sein.

In Figur 3b befindet sich das Formwerkzeug 100a weiterhin im geöffneten oder zumindest noch in einem teilweise geöffneten Zustand. Das wenigstens eine Schneidelement 182 wird mit Hilfe der mit dem wenigstens einen Schneidelement 182 gekoppelten wenigstens einen Betätigungseinrichtung 184 ausgerückt. Hierbei bewegt sich das wenigstens eine Schneidelement 182 im Wesentlichen senkrecht von der Trägereinrichtung 142 des unteren Werkzeugteils 140 in Richtung des darüber liegend angeordneten Materialbogens 10. Diese Ausrückbewegung wird in Figur 3b mit den Pfeilen 31 angedeutet. Das wenigstens eine Schneidelement 182 wird soweit ausgerückt bis sich das Schneidelement 182 bzw. die Spitze des wenigstens einen Schneidelements 182 knapp unterhalb des Materialbogens 10 befindet. Das wenigstens eine Schneidelement 182 berührt den Bogen 10 in der ausgerückten Position noch nicht.

Mit Hilfe der wenigstens einen zweiten Betätigungseinrichtung 188 wird nun das wenigstens eine Stützelement 185 in Richtung des wenigstens einen ausgerückten Schneidelements 182 bewegt, so dass wenigstens ein Abschnitt (siehe Abschnitt mit Auflagefläche 185a in Figur 3c) des wenigstens einen Stützelements 185 das wenigstens eine Schneidelement 182 untergreift. In der in Figur 3c gezeigten Implementierung wird das wenigstens eine Stützelement 185 horizontal nach innen bewegt (siehe Pfeile 32 in der Figur 3c). Dadurch kann ein Auflageelement 184a der Betätigungseinrichtung 184 auf der Auflagefläche 185a des wenigstens einen Stützelements 185 aufliegen. Das wenigstens eine Stützelement 185 hat somit die Funktion, das wenigstens eine Schneidelement 182 bei dem Schneidvorgang zu stützen und somit die Betätigungseinrichtung 184 zu entlasten. Auf dem Stützelement 185 lasten die beim Schneiden (Stanzen) auf das Schneidelement 182 einwirkenden Schneidkräfte (Stanzkräfte). Somit wird die Betätigungseinrichtung 184, die beispielsweise einen pneumatischen oder hydraulischen Hubmechanismus implementiert, entlastet.

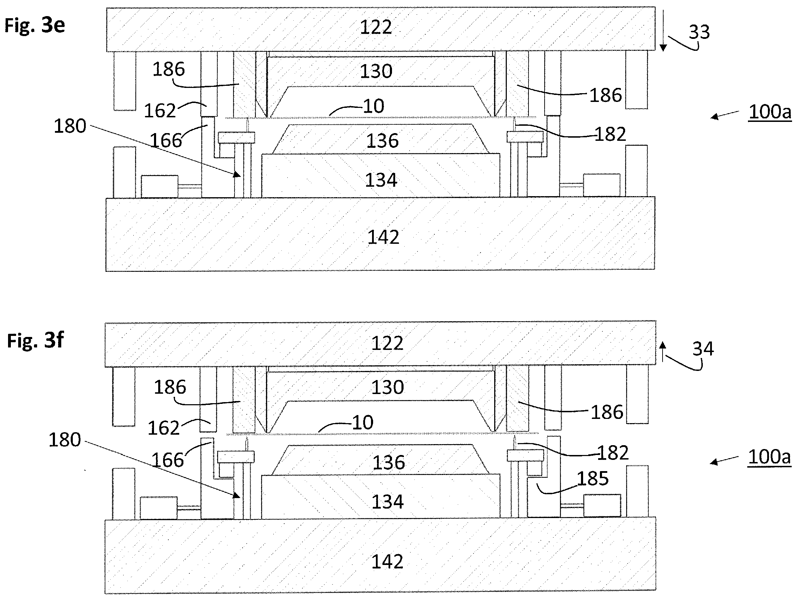

Anschließend wird nun das obere Werkzeugteil 120 abgesenkt, bis das obere Anschlagelement 162 mit dem unteren Anschlagelement 166 in Berührung kommt. Diese Absenkbewegung des oberen Werkzeugteils 100a ist durch nach unten zeigende Pfeile 33 in den Figuren 3d und 3e dargestellt. Durch die Absenkbewegung kommt das obere Werkzeugteil 120 in Anlage mit dem Materialbogen 10 (siehe Figur 3d) und drückt diesen in Richtung des wenigstens einen Schneidelements 182. Dadurch wird der Bogen 10 am Ort des wenigstens einen ausgerückten Schneidelements 182 vorgeschnitten bzw. vorgestanzt, noch bevor der Bogen 10 eine nennenswerte Umformung erfährt (siehe Figur 3e). Dieser Vorschnitt dient als kontrollierter Entlastungsschnitt und bewirkt, dass der flächenförmige Bogen 10 leichter in eine dreidimensionale Form umgeformt werden kann.

Wie in den Figuren 3a bis 3j schematisch angedeutet, ist das wenigstens eine Schneidelement am oder in der Nähe des Außenrandes der Form (bzw. der beiden Formhälften 130, 134) angeordnet und erzeugt somit einen Schnitt in dem Bogen 10 in oder in der Nähe des Außenrandes des zu erzeugenden Artikels 11, wo der Übergang vom flächenförmigen Bogen zu dem dreidimensionalen Artikel ist. Dort treten beim Umformen die größten Umformkräfte (Zugkräfte) auf. Auf diese Weise können unkontrollierte Risse während des Umformens eliminiert bzw. stark reduziert werden, wodurch der Ausschuss an mangelhaften Artikeln stark zurückgeht.

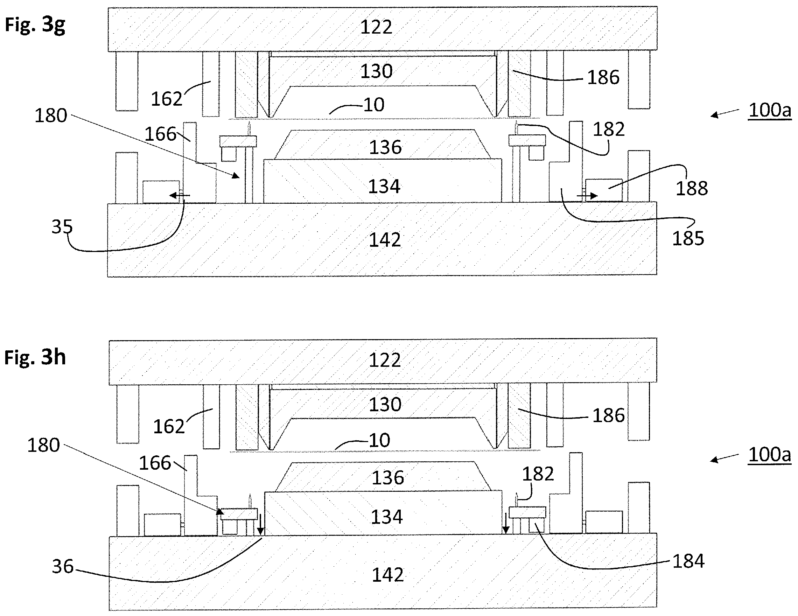

Im Anschluss an den Schneidprozess wird nun das Oberwerkzeug 120 nochmals leicht angehoben. Dies ist durch Pfeil 34 in Figur 3f verdeutlicht. Durch die Hubbewegung wird das obere Werkzeugteil 120 vom unteren Werkzeugteil 140 nochmals leicht wegbewegt. Dadurch kann sich das wenigstens eine Gegenschneidelement 186 vom darunter liegenden, ausgerückten und gestützten Schneidelement 182 lösen. Auf das wenigstens eine Schneidelement 182 wirkt nun keine nennenswerte Last mehr, so dass das wenigstens eine Stützelement 185 durch die wenigstens eine zweite Betätigungseinrichtung 188 horizontal nach außen, also von dem wenigstens einen Schneidelement 182 wieder weg bewegt werden kann. Diese horizontale Bewegung des Stützelements 185 nach außen ist durch Pfeile 35 in der Figur 3g angedeutet.

Anschließend kann das nicht mehr unterstützte, wenigstens eine Schneidelement 182 mit Hilfe der wenigstens einen Betätigungseinrichtung 184 wieder eingerückt werden. Diese Bewegung ist durch Pfeile 36 in der Figur 3h angedeutet, wobei Figur 3h den Zustand zeigt, bei dem das wenigstens eine Schneidelement 182 vollständig eingerückt ist.

Das obere Werkzeugteil 120 wird nun auf das untere Werkzeugteil 140 abgesenkt (siehe Pfeil 37 in Figur 3i), bis das obere Anschlagelement 164 in Anlage mit dem korrespondierenden unteren Anschlagelement 168 kommt. Das Formwerkzeug 100a ist nun geschlossen (siehe Figur 3i).

Durch die Absenkung des oberen Werkzeugteils 120 auf das untere Werkzeugteil 140 wird der zwischen den beiden Formhälften 130, 134 angeordnete Materialbogen 10 zu dem wenigstens einen Artikel 11 umgeformt. Ferner wird der wenigstens eine Artikel 11 an seinem Außenrand mit Hilfe der Schneidlinie 150 (bzw. Schneidkante) fertiggeschnitten sobald das Formwerkzeug 100a geschlossen ist. Mit Fertigschneiden ist gemeint, dass der ausgeformte Artikel 11 vom Materialbogen 10 getrennt wird. Die Umformung des Materialbogens 10 zu dem dreidimensionalen Artikel 11 ist nun abgeschlossen.

Das obere Werkzeugteil 120 wird nun vom Unterwerkzeug 140 wieder weg bewegt, also angehoben. Diese Hubbewegung ist durch Pfeil 38 in Figur 3j verdeutlicht. Figur 3j zeigt das Formwerkzeug 100a wieder im geöffneten Zustand (Ausgangsposition). Der Artikel 11 kann mit Hilfe einer Entnahmeeinrichtung (in der Figur 3j nicht dargestellt) entnommen werden. Anschließend kann mit Hilfe einer nicht näher dargestellten Fördereinrichtung ein Abschnitt des Materialbogens 10 nachgerückt werden. Anschließend kann ein neuer Formzyklus beginnen.

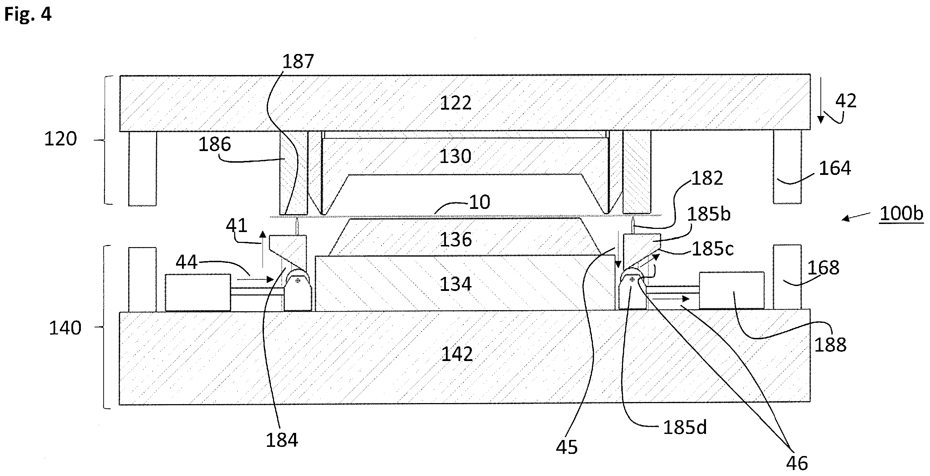

In Zusammenhang mit der Figur 4 wird ein weiteres Formwerkzeug 100b beschrieben, das sich vom Formwerkzeug 100a der Figuren 3a bis 3j vor allem im Stützmechanismus unterscheidet. Dieser wird nachfolgend näher beschrieben. Alle weiteren Elemente des Formwerkzeugs 100b sind identisch oder erfüllen dieselbe Funktion wie die Elemente im Formwerkzeug 100a und werden daher nicht erneut beschrieben. Es wird vielmehr auf die entsprechende Beschreibung des Formwerkzeugs 100a in Zusammenhang mit den Figuren 3a bis 3j weiter oben verwiesen.

Figur 4 zeigt das Formwerkzeug 100b in einem teilweise geöffneten Zustand, bei dem der Materialbogen 10 zwischen den beiden Formhälften 130, 134 noch nicht nennenswert verformt ist. Das wenigstens eine Schneidelement 182 befindet sich in seiner ausgerückten Position unterhalb des Materialbogens 10. Das Ausrücken des wenigstens einen Schneidelements 182 kann mit Hilfe der wenigstens einen Betätigungseinrichtung 184 erfolgen, wie in Zusammenhang mit der Figur 3b und dem Formwerkzeug 100a weiter oben beschrieben. Die Ausrückbewegung ist durch den Pfeil 41 in Figur 4 angedeutet.

Der Stützmechanismus des Formwerkzeugs 100b umfasst wenigstens eine zweite Betätigungseinrichtung 188 und wenigstens ein mit der wenigstens einen zweiten Betätigungseinrichtung 188 gekoppeltes Rollenelement 185d. Das wenigstens eine Rollenelement 185d ist derart angeordnet, dass es an einer abgeschrägten Auflagefläche 185c wenigstens eines Stützelements 185b abrollen kann. Das wenigstens eine Stützelement 185b, das wenigstens eine Rollenelement 185d sowie die wenigstens eine mit dem wenigstens einen Rollenelement 185d gekoppelte Betätigungseinrichtung 188 sind jeweils im unteren Werkzeugteil 140 angeordnet. Insbesondere sind das wenigstens eine Stützelement 185b und Rollenelement 185d unterhalb des wenigstens einen Schneidelements 182 angeordnet.

Zur Unterstützung der wenigstens einen Betätigungseinrichtung 184 (bzw. des wenigstens einen Schneidelements 182) während des Schneidens (Stanzens) des Materialbogens 10 wird das wenigstens eine Rollenelement 185d ausgerückt. Hierbei wird das wenigstens eine Rollenelement 185d (horizontal) mit Hilfe der wenigstens einen zweiten Betätigungseinrichtung 188 nach innen (also in Richtung der unteren Formhälfte 134) verschoben, was durch den Pfeil 44 in der Figur 4 angedeutet ist. Das wenigstens eine Rollenelement 185d wird durch das Ausrücken in eine Position unterhalb des Stützelements 185b gebracht. Das darüber liegende Stützelement 185b liegt mit seiner (nach außen) abgeschrägten Auflagefläche 185c am ausgerückten Rollenelement 185d auf.

Die wenigstens eine zweite Betätigungseinrichtung 188 ist ferner dazu ausgelegt, eine Stützkraft auf das wenigstens eine ausgerückte Rollenelement 185d auszuüben, die vom Betrag her in etwa der Stanzkraft entspricht, die beim Schneiden (Stanzen) auf das wenigstens eine Schneidelement 182 ausgeübt wird. Das obere Werkzeugteil 120 wird nun soweit abgesenkt, bis das wenigstens eine Gegenschneidelement 186 in Anlage mit dem wenigstens einen, darunterliegenden Schneidelement 182 kommt und auf dieses eine gewünschte Stanzkraft zum Durchschneiden des Materialbogens 10 ausübt (dargestellt durch Pfeil 42 in Figur 4). Die auf das wenigstens eine Schneidelement 182 ausgeübte Stanzkraft wird durch die vom darunterliegenden Stützmechanismus aufgebrachte, der Stanzkraft entgegenwirkende Stützkraft im Wesentlichen kompensiert, wodurch die Betätigungseinrichtung 184 entlastet wird.

Nach dem Stanzvorgang wird das erste Werkzeugteil 120 weiter abgesenkt. Gleichzeitig kann die mit Hilfe der zweiten Betätigungseinrichtung 188 aufgebaute Stützkraft wieder abgebaut werden. Aufgrund des so entstandenen Kräfteungleichgewichts wird das wenigstens eine Stützelement 185b zusammen mit dem wenigstens einen Schneidelement 182 nach unten bewegt (siehe Pfeil 45 in der Figur 4, der diese Bewegung andeutet). Durch die Bewegung des wenigstens einen Stützelements 185b nach unten rollt das darunter angeordnete wenigstens eine Rollenelement 185d entlang der abgeschrägten Auflagefläche 185c nach außen ab. Diese Bewegung wird durch die Pfeile 46 in der Figur 4 schematisch angedeutet. Das wenigstens eine Rollenelement 185d und das damit zusammenwirkende Stützelement 185b befinden sich anschließend wieder in ihrer eingerückten Position. Das Formwerkzeug 100b kann nun ganz geschlossen und der Materialbogen 10 vollständig umgeformt werden.

Der Vorteil des in Zusammenhang mit der Figur 4 beschriebenen Stützmechanismus besteht darin, dass das obere Werkzeugteil 120 nicht wieder angehoben werden muss, um das wenigstens eine Stützelement 185b und das Rollenelement 185d mit Hilfe der zweiten Betätigungseinrichtung 188 wieder einrücken zu können. Vielmehr wird durch die abgeschrägte Stützfläche 185c das wenigstens eine Rollenelement 185d einfach nach außen gedrückt, wenn sich das obere Werkzeugteil 120 weiter auf das untere Werkzeugteil 140 zu bewegt. Ein kurzzeitiges Anheben des oberen Werkzeugteils 120, wie in Zusammenhang mit dem Formwerkzeug 100a weiter oben beschrieben, ist somit nicht mehr notwendig, um den Stützmechanismus für das Einrücken freizugeben. Somit kann der Formprozess weiter beschleunigt werden.

Die hier beschriebene Formtechnik ist insbesondere für Materialbögen geeignet, die im Vergleich zu thermoplastischen Folien eine geringere Elastizität aufweisen und somit schwerer umzuformen sind. Durch das Erzeugen lokaler Schnitte (Vorschnitte) im Materialbogen ist es möglich, diesen zu flexibilisieren und somit die Umformung zu dreidimensionalen Artikeln zu verbessern.

## Patentansprüche

1. Formwerkzeug (100, 100a, 100b) zur Umformung eines Materialbogens (10) in wenigstens einen dreidimensionalen Artikel (11), wobei das Formwerkzeug (100, 100a, 100b) dazu ausgebildet ist, wahlweise einen geöffneten und einen geschlossenen Zustand einzunehmen, wobei das Formwerkzeug (100, 100a, 100b) umfasst:
ein erstes Werkzeugteil (120) und ein mit dem ersten Werkzeugteil (120) zusammenwirkendes zweites Werkzeugteil (140), wobei im geschlossenen Zustand des Formwerkzeugs (100, 100a, 100b) die beiden Werkzeugteile (120, 140) aufeinander zubewegt sind, und wobei im geöffneten Zustand des Formwerkzeugs (100, 100a, 100b) die beiden Werkzeugteile (120, 140) voneinander wegbewegt sind;
eine im ersten Werkzeugteil (120) angeordnete erste Formhälfte (130) und eine im zweiten Werkzeugteil (140) angeordnete zweite Formhälfte (134), wobei die beiden Formhälften (130, 134) zur Umformung des zwischen den beiden Werkzeugteilen (120, 140) angeordneten Materialbogens (10) in wenigstens einen dreidimensionalen Artikel (11) ausgebildet sind, wenn die beiden Werkzeugteile (120, 140) aufeinander zubewegt werden; und
eine Schneideinrichtung (180) umfassend wenigstens ein Schneidelement (182) und wenigstens eine mit dem wenigstens einen Schneidelement (182) gekoppelte Betätigungseinrichtung (184), wobei die wenigstens eine Betätigungseinrichtung (184) dazu ausgebildet ist, das wenigstens eine Schneidelement (182) in Richtung des zwischen den beiden Werkzeugteilen (120, 140) angeordneten Materialbogens (10) auszurücken, um den Materialbogen (10) zu schneiden,
**dadurch gekennzeichnet,**
**dass** das Formwerkzeug (100, 100a, 100b) so eingerichtet ist, dass sich das Formwerkzeug (100, 100a, 100b) dabei im geöffneten Zustand oder in einem teilweise geöffneten Zustand befindet.

2. Formwerkzeug (100, 100a, 100b) nach Anspruch 1, wobei die wenigstens eine Betätigungseinrichtung (184) dazu ausgebildet ist, das wenigstens eine Schneidelement (182) nach dem Schneiden des Materialbogens (10) wieder einzurücken.

3. Formwerkzeug (100, 100a, 100b) nach einem der vorhergehenden Ansprüche, wobei das wenigstens eine Schneidelement (182) derart ausgebildet und im Formwerkzeug (100, 100a, 100b) angeordnet ist, dass es in der ausgerückten Position den Materialbogen (10) am äußeren Rand des zu formenden oder bereits geformten Artikels (11) oder in der Nähe des äußeren Randes des zu formenden oder bereits geformten Artikels (11) zumindest teilweise vorschneidet oder schneidet.

4. Formwerkzeug (100, 100a, 100b) nach einem der vorhergehenden Ansprüche, wobei das wenigstens eine Schneidelement (182) im ersten Werkzeugteil (120) und/oder im zweiten Werkzeugteil (140) angeordnet ist, und/oder wobei die wenigstens eine Betätigungseinrichtung (184) im ersten Werkzeugteil (120) und/oder im zweiten Werkzeugteil (140) angeordnet ist.

5. Formwerkzeug (100, 100a, 100b) nach einem der vorhergehenden Ansprüche, wobei die Schneideinrichtung (180) ferner wenigstens ein mit dem wenigstens einen Schneidelement (182) zusammenwirkendes Gegenschneidelement (186) umfasst, wobei, optional, das wenigstens eine Gegenschneidelement (186) in dem dem ausrückbaren Schneidelement (182) gegenüberliegenden Werkzeugteil (120 oder 140) angeordnet ist.

6. Formwerkzeug (100, 100a, 100b) nach einem der vorhergehenden Ansprüche, wobei das ausrückbare Schneidelement (182) wenigstens ein Schneidmesser umfasst.

7. Formwerkzeug (100, 100a, 100b) nach einem der vorhergehenden Ansprüche, wobei die wenigstens eine Betätigungseinrichtung (184) einen pneumatisch, hydraulisch oder elektromechanisch angetriebenen Aus- und Einrückmechanismus umfasst.

8. Formwerkzeug (100, 100a, 100b) nach einem der vorhergehenden Ansprüche, ferner umfassend:
wenigstens einen Stützmechanismus (188, 185, 185a-d), der zur Stützung des wenigstens einen ausgerückten Schneidelements (182) vorgesehen ist; und/oder
wenigstens eine im ersten und/oder zweiten Werkzeugteil (120, 140) angeordnete Schneidlinie (150) zum Fertigschneiden des wenigstens einen geformten Artikels (11).

9. Formwerkzeug (100, 100a, 100b) nach einem der vorhergehenden Ansprüche, wobei der Materialbogen (10) vorwiegend aus Fasern, insbesondere aus Naturfasern besteht.

10. Verwendung eines Formwerkzeugs (100, 100a, 100b) gemäß einem der Ansprüche 1 bis 9 zur Herstellung wenigstens eines dreidimensionalen Artikels (11) aus einem flächenförmigen Materialbogen (10), insbesondere aus einem flächenförmigen Materialbogen (10) aus Naturfasern.

11. Formmaschine (1) zur Herstellung wenigstens eines Artikels (11) aus einem flächenförmigen Materialbogen (10), umfassend:
das Formwerkzeug (100, 100a, 100b) gemäß einem der Ansprüche 1 bis 9;
einen Obertisch (2) zur Aufnahme des ersten Werkzeugteils (120) des Formwerkzeugs (100, 100a, 100b); und
einen Untertisch (3) zur Aufnahme des zweiten Werkzeugteils (140) des Formwerkzeugs (100, 100a, 100b), wobei der Obertisch (2) und/oder der Untertisch (3) beweglich gelagert ist/sind.

12. Verfahren (200) zum Herstellen wenigstens eines dreidimensionalen Artikels (11) aus einem flächenförmigen Materialbogen (10), folgende Schritte umfassend:
- Bereitstellen (S201) eines Formwerkzeugs (100, 100a, 100b) gemäß einem der Ansprüche 1 bis 9;
- Anordnen (S202) des flächenförmigen Materialbogens (10) zwischen den beiden Formhälften (130, 134) des Formwerkzeugs (100, 100a, 100b);
- Ausrücken (S203) des wenigstens einen Schneidelements (182) des Formwerkzeugs (100, 100a, 100b) in Richtung des zwischen den beiden Formhälften (130, 134) angeordneten Materialbogens (10);
- Schneiden (S204) des Materialbogens (10) mit Hilfe des wenigstens einen Schneidelements (182) bei geöffnetem oder zumindest teilweise geöffnetem Formwerkzeug (100, 100a, 100b);
- Einrücken (S205) des wenigstens einen Schneidelements (182), nachdem der Materialbogen (10) geschnitten wurde; und
- anschließendes Schließen (S206) des Formwerkzeuges (100, 100a, 100b) und Umformen des Materialbogens (10) zu wenigstens einem dreidimensionalen Artikel (11).

13. Verfahren nach Anspruch 12, wobei das Schneiden mit Hilfe des ausrückbaren Schneidelements (182) ein Vorschneiden des Materialbogens umfasst, und wobei das Verfahren ferner umfasst:
- Fertigschneiden des wenigstens einen ausgeformten Artikels (11), um den Artikel (11) von dem Materialbogen (10) zu trennen.

14. Verfahren nach Anspruch 12 oder 13, wobei das Ausrücken ein Positionieren des wenigstens einen Schneidelements (182) unmittelbar unterhalb oder oberhalb des Materialbogens (10) umfasst, und wobei der Schritt des Schneidens ein Bewegen des dem wenigstens einen Schneidelement (182) gegenüberliegenden Werkzeugteils in Richtung des Schneidelements (182) umfasst, bis das wenigstens eine Gegenschneidelement (186) in Kontakt mit dem wenigstens einen Schneidelement (182) kommt, und wobei der Schritt des Einrückens des wenigstens einen ausgerückten Schneidelements (182) ein Wegbewegen des Werkzeugteils mit dem wenigstens einen Gegenschneidelement (186) von dem wenigstens einen Schneidelement (182) umfasst, um das wenigstens eine Schneidelement (182) für das Einrücken freizugeben.

15. Verfahren zum Herstellen wenigstens eines dreidimensionalen Artikels (11) aus einem flächenförmigen Materialbogen (10), folgende Schritte umfassend:
- Bereitstellen eines Formwerkzeugs (100, 100a, 100b) gemäß einem der Ansprüche 1 bis 13;
- Anordnen des flächenförmigen Materialbogens (10) zwischen den beiden Formhälften (130, 134) des Formwerkzeugs (100, 100a, 100b);
- Schließen des Formwerkzeuges (100, 100a, 100b) und Umformen des Materialbogens (10) zu wenigstens einem dreidimensionalen Artikel (11);
- Ausrücken des wenigstens einen Schneidelements (182) des Formwerkzeugs (100, 100a, 100b); und
- Ausschneiden, mit Hilfe des wenigstens einen ausgerückten Schneidelements (182), des wenigstens einen dreidimensionalen Artikels (11) aus dem Materialbogen (10), wobei die Schritte des Ausrückens und Ausschneidens bei geöffnetem oder teilweise geöffnetem Formwerkzeug (100, 100a, 100b) erfolgen.

## Claims

1. Molding tool (100, 100a, 100b) for reshaping a sheet of material (10) into at least one three-dimensional article (11), wherein the molding tool (100, 100a, 100b) is adapted to occupy optionally an open and a closed state, wherein the molding tool (100, 100a, 100b) comprises:
a first tool part (120) and a second tool part (140) that works together with the first tool part (120), wherein in the closed state of the molding tool (100, 100a, 100b), the two tool parts (120, 140) are moved toward one another, and wherein in the open state of the molding tool (100, 100a, 100b), the two tool parts (120, 140) are moved away from one another;
a first mold half (130) arranged in the first tool part (120) and a second mold half (134) arranged in the second tool part (140), wherein the two mold halves (130, 134) are adapted for reshaping the sheet of material (10) arranged between the two tool parts (120, 140) into at least one three-dimensional article (11) when the two tool parts (120, 140) are moved toward one another; and
a cutting device (180) comprising at least one cutting element (182) and at least one actuating device (184) coupled to the at least one cutting element (182), wherein the at least one actuating device (184) is adapted to extend the at least one cutting element (182) in the direction of the sheet of material (10), arranged between the two tool parts (120, 140), in order to cut the sheet of material (10),
**characterized in that**
the molding tool (100, 100a, 100b) is adapted such that the molding tool (100, 100a, 100b) is in the open state or in a partially open state during this process.

2. Molding tool (100, 100a, 100b) according to claim 1, wherein the at least one actuating device (184) is adapted to retract again the at least one cutting element (182) after the sheet of material (10) is cut.

3. Molding tool (100, 100a, 100b) according to one of the preceding claims, wherein the at least one cutting element (182) is arranged in the molding tool (100, 100a, 100b) in such a way that in the extended position, it at least partially precuts or cuts the sheet of material (10) on the outer edge of the article (11) that is to be molded or is already molded or close to the outer edge of the article (11) that is to be molded or is already molded.

4. Molding tool (100, 100a, 100b) according to one of the preceding claims, wherein the at least one cutting element (182) is arranged in the first tool part (120) and/or in the second tool part (140) and/or wherein the at least one actuating device (184) is arranged in the first tool part (120) and/or in the second tool part (140).

5. Molding tool (100, 100a, 100b) according to one of the preceding claims, wherein the cutting device (180) further comprises at least one opposing cutting element (186) that works together with the at least one cutting element (182), wherein, optionally, the at least one opposing cutting element (186) is arranged in the tool part (120 or 140) opposite to the extendable cutting element (182).

6. Molding tool (100, 100a, 100b) according to one of the preceding claims, wherein the extendable cutting element (182) comprises at least one blade.

7. Molding tool (100, 100a, 100b) according to one of the preceding claims, wherein the at least one actuating device (184) comprises an extending and retracting mechanism driven pneumatically, hydraulically, or electromechanically.

8. Molding tool (100, 100a, 100b) according to one of the preceding claims, further comprising:
at least one support mechanism (188, 185, 185a-d) that is provided for supporting the at least one extended cutting element (182) and/or
at least one cutting line (150), arranged in the first and/or second tool part (120, 140), for final-cutting the at least one molded article (11).

9. Molding tool (100, 100a, 100b) according to one of the preceding claims, wherein the sheet of material (10) consists primarily of fibers, in particular natural fibers.

10. Use of a molding tool (100, 100a, 100b) according to one of claims 1 to 9 for producing at least one three-dimensional article (11) from a laminar sheet of material (10), in particular a laminar sheet of material (10) made of natural fibers.

11. Molding machine (1) for producing at least one article (11) from a laminar sheet of material (10), comprising:
the molding tool (100, 100a, 100b) according to one of claims 1 to 9;
an upper table (2) for accommodating the first tool part (120) of the molding tool (100, 100a, 100b); and
a lower table (3) for accommodating the second tool part (140) of the molding tool (100, 100a, 100b), wherein the upper table (2) and/or the lower table (3) is/are movably mounted.

12. Method (200) for producing at least one three-dimensional article (11) from a laminar sheet of material (10), comprising the following steps:
- providing (S201) a molding tool (100, 100a, 100b) according to one of claims 1 to 9;
- arranging (S202) the laminar sheet of material (10) between the two mold halves (130, 134) of the molding tool (100, 100a, 100b);
- extending (S203) the at least one cutting element (182) of the molding tool (100, 100a, 100b) in the direction of the sheet of material (10) arranged between the two mold halves (130, 134);
- cutting (S204) the sheet of material (10) using the at least one cutting element (182) with the molding tool (100, 100a, 100b) being open or at least partially open;
- retracting (S205) the at least one cutting element (182) after the sheet of material (10) was cut; and
- subsequently closing (S206) the molding tool (100, 100a, 100b) and reshaping the sheet of material (10) to form at least one three-dimensional article (11).

13. Method according to claim 12, wherein the cutting using the extendable cutting element (182) comprises a precutting of the sheet of material, and wherein the method further comprises:
- final-cutting of the at least one formed article (11) in order to separate the article (11) from the sheet of material (10).

14. Method according to claim 12 or 13, wherein the extension comprises a positioning of the at least one cutting element (182) directly below or above the sheet of material (10), and wherein the step of cutting comprises a movement of the tool part, opposite to the at least one cutting element (182), in the direction of the cutting element (182), until the at least one opposing cutting element (186) comes into contact with the at least one cutting element (182), and wherein the step of retracting the at least one extended cutting element (182) comprises moving the tool part with the at least one opposing cutting element (186) away from the at least one cutting element (182) in order to release the at least one cutting element (182) for retraction.

15. Method for producing at least one three-dimensional article (11) from a laminar sheet of material (10), comprising the following steps:
- providing a molding tool (100, 100a, 100b) according to one of claims 1 to 13;
- arranging the laminar sheet of material (10) between the two mold halves (130, 134) of the molding tool (100, 100a, 100b);
- closing the molding tool (100, 100a, 100b) and reshaping the sheet of material (10) to form at least one three-dimensional article (11);
- extending the at least one cutting element (182) of the molding tool (100, 100a, 100b); and
- cutting-out, using the at least one extended cutting element (182), of the at least one three-dimensional article (11) from the sheet of material (10), wherein the steps of extending and cutting-out are performed when the molding tool (100, 100a, 100b) is in the open state or in a partially open state.

## Revendications

1. Outil de formage (100, 100a, 100b) pour transformer une feuille de matériau (10) en au moins un article tridimensionnel (11), dans lequel l'outil de formage (100, 100a, 100b) est conçu pour prendre au choix un état ouvert et un état fermé, l'outil de formage (100, 100a, 100b) comprenant :
une première partie d'outil (120) et une deuxième partie d'outil (140) coopérant avec la première partie d'outil (120), dans lequel, à l'état fermé de l'outil de formage (100, 100a, 100b) les deux parties d'outil (120, 140) sont rapprochées l'une de l'autre, et dans lequel, à l'état ouvert de l'outil de formage (100, 100a, 100b), les deux parties d'outil (120, 140) sont éloignées l'une de l'autre ;
une première moitié de moule (130) disposée dans la première partie d'outil (120) et une deuxième moitié de moule (134) disposée dans la deuxième partie d'outil (140), les deux moitiés de moule (130, 134) étant conçues pour transformer la feuille de matériau (10) disposée entre les deux parties d'outil (120, 140) en au moins un article tridimensionnel (11) lorsque les deux parties d'outil (120, 140) sont rapprochées l'une de l'autre ; et
un dispositif de coupe (180) comprenant au moins un élément de coupe (182) et au moins un dispositif d'actionnement (184) couplé à l'au moins un élément de coupe (182), dans lequel l'au moins un dispositif d'actionnement (184) est conçu pour étendre l'au moins un élément de coupe (182) en direction de la feuille de matériau (10) disposée entre les deux parties d'outil (120, 140) afin de couper la feuille de matériau (10),
**caractérisé en ce que**
l'outil de formage (100, 100a, 100b) est adapté de telle sorte que l'outil de formage (100, 100a, 100b) se trouve alors à l'état ouvert ou à l'état partiellement ouvert.

2. Outil de formage (100, 100a, 100b) selon la revendication 1, dans lequel l'au moins un dispositif d'actionnement (184) est conçu pour rétracter l'au moins un élément de coupe (182) après la découpe de la feuille de matériau (10).

3. Outil de formage (100, 100a, 100b) selon l'une des revendications précédentes, dans lequel l'au moins un élément de coupe (182) est conçu et disposé dans l'outil de formage (100, 100a, 100b) de telle sorte que, dans la position étendue, il prédécoupe ou découpe au moins partiellement la feuille de matériau (10) au niveau du bord extérieur de l'article (11) à former ou déjà formé ou à proximité du bord extérieur de l'article (11) à former ou déjà formé.

4. Outil de formage (100, 100a, 100b) selon l'une des revendications précédentes, dans lequel l'au moins un élément de coupe (182) est disposé dans la première partie d'outil (120) et/ou dans la deuxième partie d'outil (140), et/ou dans lequel l'au moins un dispositif d'actionnement (184) est disposé dans la première partie d'outil (120) et/ou dans la deuxième partie d'outil (140).

5. Outil de formage (100, 100a, 100b) selon l'une des revendications précédentes, le dispositif de coupe (180) comprenant en outre au moins un élément de contre-coupe (186) coopérant avec l'au moins un élément de coupe (182), dans lequel, en option, l'au moins un élément de contre-coupe (186) est disposé dans la partie d'outil (120 ou 140) opposée à l'élément de coupe extensible (182).

6. Outil de formage (100, 100a, 100b) selon l'une des revendications précédentes, dans lequel l'élément de coupe extensible (182) comprend au moins une lame de coupe.

7. Outil de formage (100, 100a, 100b) selon l'une des revendications précédentes, dans lequel l'au moins un dispositif d'actionnement (184) comprend un mécanisme d'extension et de rétraction entraîné pneumatiquement, hydrauliquement ou électromécaniquement.

8. Outil de formage (100, 100a, 100b) selon l'une des revendications précédentes, comprenant en outre :
au moins un mécanisme de support (188, 185, 185a-d) prévu pour supporter l'au moins un élément de coupe étendu (182) ; et/ou
au moins une ligne de coupe (150) disposée dans la première et/ou la deuxième partie d'outil (120, 140) pour la découpe finale de l'au moins un article formé (11).

9. Outil de formage (100, 100a, 100b) selon l'une des revendications précédentes, dans lequel la feuille de matériau (10) est principalement constituée de fibres, en particulier de fibres naturelles.

10. Utilisation d'un outil de formage (100, 100a, 100b) selon l'une des revendications 1 à 9 pour la fabrication d'au moins un article tridimensionnel (11) à partir d'une feuille de matériau plane (10), en particulier à partir d'une feuille de matériau plane (10) constituée de fibres naturelles.

11. Machine de formage (1) pour la fabrication d'au moins un article (11) à partir d'une feuille de matériau plane (10), comprenant :
l'outil de formage (100, 100a, 100b) selon l'une des revendications 1 à 9 ;
une table supérieure (2) destinée à recevoir la première partie d'outil (120) de l'outil de formage (100, 100a, 100b) ; et
une table inférieure (3) destinée à recevoir la deuxième partie d'outil (140) de l'outil de formage (100, 100a, 100b), la table supérieure (2) et/ou la table inférieure (3) étant montée(s) de manière mobile.

12. Procédé (200) pour fabriquer au moins un article tridimensionnel (11) à partir d'une feuille de matériau plane (10), comprenant les étapes suivantes :
- mettre à disposition (S201) un outil de formage (100, 100a, 100b) selon l'une des revendications 1 à 9 ;
- disposer (S202) la feuille de matériau plane (10) entre les deux moitiés de moule (130, 134) de l'outil de formage (100, 100a, 100b) ;
- étendre (S203) l'au moins un élément de coupe (182) de l'outil de formage (100, 100a, 100b) en direction de la feuille de matériau (10) disposée entre les deux moitiés de moule (130, 134) ;
- découper (S204) la feuille de matériau (10) à l'aide de l'au moins un élément de coupe (182), l'outil de formage (100, 100a, 100b) étant ouvert ou au moins partiellement ouvert ;
- rétracter (S205) l'au moins un élément de coupe (182) après la découpe de la feuille de matériau (10) ; et
- fermer ensuite (S206) l'outil de formage (100, 100a, 100b) et transformer la feuille de matériau (10) en au moins un article tridimensionnel (11).

13. Procédé selon la revendication 12, dans lequel la découpe à l'aide de l'élément de coupe extensible (182) comprend une prédécoupe de la feuille de matériau, et dans lequel le procédé comprend en outre :
- la découpe finale de l'au moins un article formé (11) afin de séparer l'article (11) de la feuille de matériau (10).

14. Procédé selon la revendication 12 ou 13, dans lequel l'extension comprend le positionnement de l'au moins un élément de coupe (182) immédiatement en dessous ou au-dessus de la feuille de matériau (10), et dans lequel l'étape de découper comprend un déplacement de la partie d'outil opposée à l'au moins un élément de coupe (182) dans la direction de l'élément de coupe (182) jusqu'à ce que l'au moins un élément de contre-coupe (186) entre en contact avec l'au moins un élément de coupe (182), et dans lequel l'étape de rétraction de l'au moins un élément de coupe étendu (182) comprend un éloignement de la partie d'outil avec l'au moins un élément de contre-coupe (186) de l'au moins un élément de coupe (182) afin de libérer l'au moins un élément de coupe (182) pour la rétraction.

15. Procédé pour fabriquer au moins un article tridimensionnel (11) à partir d'une feuille de matériau plane (10), comprenant les étapes suivantes :
- mettre à disposition un outil de formage (100, 100a, 100b) selon l'une des revendications 1 à 13 ;
- disposer la feuille de matériau plane (10) entre les deux moitiés de moule (130, 134) de l'outil de formage (100, 100a, 100b) ;
- fermer l'outil de formage (100, 100a, 100b) et transformer la feuille de matériau (10) en au moins un article tridimensionnel (11) ;
- étendre l'au moins un élément de coupe (182) de l'outil de formage (100, 100a, 100b) ; et
- découper, à l'aide de l'au moins un élément de coupe (182) étendu, l'au moins un article tridimensionnel (11) à partir de la feuille de matériau (10), les étapes de l'extension et de découpe s'effectuant lorsque l'outil de formage (100, 100a, 100b) est à l'état ouvert ou à l'état partiellement ouvert.
